## Europäisches Patentamt

(19) **European Patent Office**

**Office européen des brevets**

(11) Numéro de publication: **0 138 680**
**B1**

(12) ## FASCICULE DE BREVET EUROPEEN

(45) Date de publication du fascicule du brevet:
13.05.87

(51) Int. Cl.⁴: **C 01 B 33/28**

(21) Numéro de dépôt: **84401889.5**

(22) Date de dépôt: **21.09.84**

(54) **Procédé de fabrication de zéolite du type ZSM-5.**

(30) Priorité: **28.09.83 FR 8315404**

(43) Date de publication de la demande:
**24.04.85 Bulletin 85/17**

(45) Mention de la délivrance du brevet:
**13.05.87 Bulletin 87/20**

(84) Etats contractants désignés:
**BE DE FR GB IT NL SE**

(56) Documents cités:
**GB - A - 1 567 948**
**US - A - 4 175 114**
**US - A - 4 257 885**

(73) Titulaire: **RHONE-POULENC SPECIALITES CHIMIQUES,**
**"Les Miroirs" 18, Avenue d'Alsace, F-92400 Courbevole**
**(FR)**

(72) Inventeur: **Latourrette, Bertrand, 21, allée Clémencet,**
**F-93340 Le Raincy (FR)**
Inventeur: **Magnier, Claude, 3, rue des Chaufourniers,**
**F-75019 Paris (FR)**

(74) Mandataire: **Savina, Jacques et al, RHONE-POULENC**
**INTERSERVICES Service Brevets Chimie 25, quai Paul**
**Doumer, F-92408 Courbevoie Cédex (FR)**

## Description

La présente invention concerne un procédé de fabrication de zéolite du type ZSM-5.

Les zéolites du type ZSM-5 sont des produits bien connus qui ont notamment été décrits dans le brevet des Etats-Unis d'Amérique n° 3 702 886 et le brevet anglais n° 1 161 974.

Ces zéolites du type ZSM-5 peuvent être fabriquées par divers procédés. C'est ainsi qu'il a déjà été proposé dans le brevet français n° 1 587 860 un procédé de synthèse de ZSM-5 par mélange d'une source d'aluminium, d'une source de silicium, d'une base inorganique: l'hydroxyde de sodium et d'un composé organique choisi parmi: les composés comportant l'ion tétrapropylammonium, les amines ou les amino-alcools puis par cristallisation à une température d'environ 150°C. Les principaux inconvénients de ce procédé résident, d'une part, dans le temps très important nécessaire à la cristallisation et, d'autre part, dans la mise en œuvre de composés organiques très onéreux.

Il a également été proposé par exemple, dans le brevet des Etats-Unis d'Amérique n° 4 257 885 et le brevet anglais n° 1 567 948 d'effectuer la synthèse de zéolite du type ZSM-5 sans utiliser de composés organiques comportant le cation ammonium. Dans le brevet anglais on met en œuvre des amorces de la zéolite que l'on désire fabriquer et la réaction est effectuée en milieu aqueux. Selon le USA 4 175 114 la synthèse est effectuée dans un milieu hydro-alcoolique. Ces procédés présentent toutefois l'inconvénient d'être longs à mettre en œuvre du fait de la cinétique très lente des réactions.

La présente invention vise à proposer un procédé de fabrication de zéolithes du type ZSM-5, d'une mise en œuvre moins onéreuse que les procédés mettant en œuvre des composés ammonium quaternaires, et dans lequel le temps de cristallisation est considérablement réduit par rapport aux procédés réalisés avec amorces ou en milieu hydro-alcoolique.

La présente invention concerne en effet un procédé de fabrication de zéolite du type ZSM-5 par mélange sous agitation d'une source de silice, d'une source d'alumine et d'une source d'oxyde d'un métal alcalin puis cristallisation caractérisé en ce que le mélange est effectué en deux étapes:

— dans une première étape, on effectue le mélange de la source d'alumine avec la source de silice, le pH du mélange réactionnel doit être compris entre 1 et 7, de préférence entre 1 et 5, et le rapport molaire $SiO_2/Al_2O_3$ étant compris entre 5 et 100 et de préférence entre 10 et 60,

— dans une deuxième étape, on ajoute la source d'oxyde du métal alcalin au mélange provenant de la première étape, le pH du milieu réactionnel présente une valeur comprise entre 8 et 12 et de préférence entre 9 et 11.

La source d'alumine mise en œuvre selon la présente invention est choisie parmi les sels d'aluminium et les diverses formes d'alumine hydratées ou déshydratées. Parmi ceux-ci on utilise notamment l'aluminate de sodium, le chlorure d'aluminium, le sulfate d'aluminium, le nitrate d'aluminium, l'alumine colloïdale, la boehmite, la pseudo-boehmite, l'hydrargillite, l'alumine amorphe, les alumines de transition et leurs mélanges. Une ou plusieurs sources d'alumine peuvent être utilisées si on le désire.

La source de silice mise en œuvre selon la présente invention est choisie dans n'importe quel composé suffisamment réactif pour produire chimiquement la zéolite. On utilise par exemple les silicates solubles ou dissouts dans l'eau comme les silicates de sodium (waterglass) ou les métasilicates de sodium hydratés, le sesquisilicate ou le disilicate de type appelé «actif» ou non. On peut également metre en œuvre de la silice sous forme colloïdale, par exemple des suspensions aqueuses de silice contenant 20 à 50% en poids de silice et commercialisée par exemple sous les marques enregistrées: «Ludox», «Nalcoag» ou «Syton». La silice peut également être introduite sous forme d'une suspension de poudre finement divisée telle que celle connue sous le nom d'«aérosil» ou sous forme de silice précipitée. On peut également mettre en œuvre les fluorosilicates sous forme de sels minéraux ou d'acide.

Si on le désire, une partie de la silice et de l'alumine peut être introduite sous forme d'aluminosilicate.

Habituellement, l'aluminosilicate est utilisé sous forme amorphe.

Selon la première étape du procédé de l'invention, on effectue donc le mélange de la source d'alumine avec la source de silice dans des proportions telles que le rapport molaire $\dfrac{SiO_2}{Al_2O_3}$ du mélange soit compris entre 5 et 100 et de préférence entre 10 et 60 et plus particulièrement entre 20 et 50. Par ailleurs, le pH du milieu doit être compris entre 1 et 7 et de préférence entre 1 et 5. Selon un mode de mise en œuvre préféré de l'invention, on obtient cette valeur de pH en ajoutant de l'acide à la solution du sel d'aluminium avant son mélange avec la source de silice. L'acide peut notamment être choisi parmi: HCl, $HNO_3$, $H_2SO_4$.

Selon la deuxième étape de procédé de l'invention, on ajoute la source d'oxyde du métal alcalin au mélange issu de la première étape en amenant le pH du milieu réactionnel à une valeur comprise entre 8 et 12 et de préférence entre 9 et 11, la quantité d'oxyde de métal alcalin introduite étant telle que le mélange présente les rapports molaires suivants:

$\dfrac{OH}{SiO_2}$ compris entre 0,01 et 0,7 et de préférence entre 0,10 et 0,40

$\dfrac{H_2O}{OH}$ compris entre 10 et 500 et de préférence entre 30 et 300.

Selon l'invention, la source d'oxyde du métal alcalin est notamment choisie parmi: l'hydroxyde de sodium et l'hydroxyde de potassium.

On obtient à l'issue de cette seconde étape un gel homogène facilement agitable. Ce gel est ensuite cristallisé selon les méthodes habituelles d'obtention des zéolites de type ZSM-5 à une température comprise entre 80°C et 300°C et plus particulièrement entre 120 et 200° sous une pression autogène.

Le procédé selon l'invention permet d'obtenir des temps de cristallisation très intéressants par rapport à ceux nécessaires selon les techniques antérieures. Ainsi, l'invention permet d'atteindre notamment des temps de cristallisation compris entre 2 heures et 48 heures.

Après cristallisation, le zéolite obtenue peut être soumise à toutes les étapes habituelles de lavage, séchage, calcination et d'échange d'ion pour donner des produits utilisables comme absorbants et/ou catalyseurs.

### Exemple 1

On prépare les solutions suivantes:

— *Solution A*
26,7 g $Al_2(SO_4)_3$ 18 $H_2O$
56 g $H_2SO_4$ 98%
135 g $H_2O$

— *Solution B*
424 g silicate Na (28,6% $SiO_2$, 8,6% $Na_2O$ (vendu par Rhône-Poulenc sous l'appellation RP 16N34).

— *Solution C*
soude 40%

### Etape 1

On mélange sous agitation mécanique type Rayneri les solutions A et B. Le gel homogène formé a un rapport molaire $SiO_2/Al_2O_3$ = 50 et le $pH_1$ du mélange est de 2,5.

### Etape 2

On ajoute au mélange de l'étape 1 maintenu sous agitation 56 g de la solution C. Le mélange fluide a un $pH_2$ de 9,5.

Ce mélange homogène est transféré dans un autoclave sous pression et porté à 150°C sous agitation modérée (100 tr/mn). Après 24 h de cristallisation à 150°C, le produit est filtré et lavé à l'eau distillée. On obtient une zéolite de structure ZSM5 bien cristallisée sans impureté cristalline. On remarquera que ces temps de cristallisation sont beaucoup plus courts que ceux illustrés dans le brevet US 4 257 885. L'analyse chimique du produit ainsi obtenu est caractérisée par un rapport molaire $SiO_2/Al_2O_3$ = 39,0.

### Exemples 2 à 9

On opère de façon similaire à celle indiquée dans l'exemple 1, mais avec les valeurs des paramètres indiquées dans le tableau ci-après. Dans tous les cas on obtient une zéolite de structure ZMS5 bien cristallisée pratiquement ou totalement sans impureté cristalline. Les temps de cristallisation sont bien inférieurs à ceux de l'art antérieur pour des produits comparables.

| | 2 | 3 | 4 | 5 | 6 | 7 | 8 | 9 |
|---|---|---|---|---|---|---|---|---|
| **Solution A** | | | | | | | | |
| · $Al_2(SO_4)_3$ 18 $H_2O$ | 26,7 | 6,7 | 6,7 | 13,2 | 19,8 | 13,3 | 13,3 | 13,3 |
| · $H_2SO_4$ 98% | 56 | 8,2 | 16,4 | 30 | 44,5 | 44,5 | 44,5 | 44,5 |
| · $H_2O$ | 135 | 162 | 162 | 108 | 162 | 108 | 108 | 180 |
| **Solution B** | | | | | | | | |
| · Silicate (RP 16N34) | 424 | 84,8 | 84,8 | 170 | 255 | 381,6 | 381,6 | 381,6 |
| · $H_2O$ rajoutée en g | 0 | 147 | 147 | 126 | 189 | 57,6 | 57,6 | 108 |
| **Solution C** | 56 g NaOH (40%) | 260 g NaOH (0,5N) | 260 g NaOH (0,5N) | 26 g NaOH (40%) | 58,8 g NaOH (40%) | 44 g NaOH (40%) | 28 g NaOH (40%) | 127 g NaOH (15%) |
| **Etape 1 (A + B)** | | | | | | | | |
| · $SiO_2/Al_2O_3$ | 50 | 40 | 40 | 40 | 40 | 90 | 90 | 90 |
| · $pH_1$ | 35 | 3,5 | 3,5 | 3,5 | 2 | 38 | 38 | 3,5 |
| **Cristallisation** | | | | | | | | |
| · Température | 200°C | 170°C | 150°C | 170°C | 170°C | 165°C | 165°C | 150°C |
| · Temps | 8 h | 48 h | 24 h | 24 h | 24 h | 24 h | 24 h | 48 h |
| **Produit obtenu** | | | | | | | | |
| · RX % ZSM5 | 95 | 95 | 100 | 100 | 100 | 95 | 95 | 95 |
| (Rapport molaire $SiO_2/Al_2O_3$ de la ZSM5 obtenue) | 38 | 33 | 35 | 30 | 30 | 69 | 70 | 65 |

## Revendications

1. Procédé de fabrication de zéolithe du type ZSM-5 par mélange sous agitation d'une source de silice, d'une source d'alumine et d'une source d'oxyde d'un métal alcalin puis cristallisation, caractérisé en ce que le mélange est effectué en deux étapes:

— dans une première étape, on effectue le mélange de la source d'alumine avec la source de silice; le pH du mélange réactionnel doit être compris entre 1 et 7 et le rapport molaire $SiO_2/Al_2O_3$ doit être compris entre 5 et 100;

— dans une deuxième étape, on ajoute la source d'oxyde du métal alcalin au mélange provenant de la première étape, le pH du milieu réactionnel étant amené à une valeur comprise entre 8 et 12.

2. Procédé selon la revendication 1, caractérisé en ce que selon la deuxième étape, la quantité de métal alcalin introduite est telle que le mélange présente les rapports molaires suivants:

$\dfrac{OH}{SiO_2}$ compris entre 0,01 et 0,7, de préférence entre 0,10 et 0,40

$\dfrac{H_2O}{OH}$ compris entre 10 et 500, de préférence entre 30 et 300.

3. Procédé selon la revendication 1, caractérisé en ce que le pH du mélange réactionnel dans la première étape est compris entre 2 et 5.

4. Procédé selon la revendication 1, caractérisé en ce que le rapport molaire $SiO_2/Al_2O_3$ dans la première étape est compris entre 10 et 60.

5. Procédé selon la revendication 1, caractérisé en ce que le pH du milieu réactionnel dans la deuxième étape est compris entre 9 et 11.

## Claims

1. Process for the manufacture of a zeolite of the ZMS-5 type by mixing, with stirring, a source of silica, a source of alumina and a source of an alkali metal oxide, followed by crystallization, characterized in that the mixture is produced in two stages:

— in a first stage, mixing of the source of alumina with the source of silica is performed; the pH of the reaction mixture should be between 1 and 7 and the molar ratio $SiO_2/Al_2O_3$ should be between 5 and 100;

— in a second stage, the source of alkali metal oxide is added to the mixture originating from the first stage, the pH of the reaction medium being brought to a value between 8 and 12.

2. Process according to Claim 1, characterized in that, according to the stage, the quantity of alkali metal which is added is such that the mixture has the following molar ratios:

$\dfrac{OH}{SiO_2}$ between 0.01 and 0.7, preferably between 0.10 and 0.40

$\dfrac{H_2O}{OH}$ between 10 and 500 and preferably between 30 and 300.

3. Process according to Claim 1, characterized in that the pH of the reacting mixture in the first stage is between 2 and 5.

4. Process according to Claim 1, characterized in that the molar ratio $SiO_2/Al_2O_3$ in the first stage is between 10 and 60.

5. Process according to Claim 1, characterized in that the pH of the reaction medium in the second stage is between 9 and 11.

## Patentansprüche

1. Verfahren zur Herstellung eines Zeolits des ZSM-5-Typs durch Vermischen einer Siliziumdioxidquelle, einer Aluminiumoxidquelle und einer Alkalimetalloxidquelle unter Rühren und anschliessende Kristallisation, dadurch gekennzeichnet, dass das Mischen in zwei Schritten ausgeführt wird:

— in einem ersten Schritt mischt man die Aluminiumoxidquelle mit der Siliziumdioxidquelle; der pH-Wert des Reaktionsgemisches soll dabei zwischen 1 und 7 liegen und das molare Verhältnis $SiO_2/Al_2O_3$ soll zwischen 5 und 100 liegen;

—in einem zweiten Schritt fügt man zu der im ersten Schritt erhaltenen Mischung die Alkalimetalloxidquelle hinzu, wobei man den pH des Reaktionsgemisches auf einen Wert zwischen 8 und 12 bringt.

2. Verfahren nach Anspruch 1, dadurch gekennzeichnet, dass die im zweiten Schritt eingebrachte Menge des Alkalimetalloxids so gewählt ist, dass die Mischung die folgenden molaren Verhältnisse aufweist:

$\dfrac{OH}{SiO_2}$ zwischen 0,01 und 0,7, vorzugsweise zwischen 0,1 und 0,4

$\dfrac{H_2O}{OH}$ zwischen 10 und 500, vorzugsweise zwischen 30 und 300.

3. Verfahren nach Anspruch 1, dadurch gekennzeichnet, dass der pH-Wert des Reaktionsgemisches im ersten Schritt zwischen 2 und 5 liegt.

4. Verfahren nach Anspruch 1, dadurch gekennzeichnet, dass im ersten Schritt das molare Verhältnis $SiO/Al_2O_3$ zwischen 10 und 60 liegt.

5. Verfahren nach Anspruch 1, dadurch gekennzeichnet, dass der pH-Wert des Reaktionsgemisches im zweiten Schritt zwischen 9 und 11 liegt.